# EUROPEAN PATENT APPLICATION

(11) **EP 1 041 377 A2**
(43) Date of publication of application: **04.10.2000**
(21) Application number: 00105590.4
(22) Date of filing: 16.03.2000
(51) Int. Cl.: G01N 15/02, G01N 1/22

(54) **A sampler and method for obtaining size distributions of aerosol particles**

(30) Priority: 17.03.1999 GB 9906185
(71) Applicant: Gorbunov, Boris Zachar, Canterbury, Kent CT1 3EY (GB); Priest, Nicholas Derham, Oxfordshire SN7 8QQ (GB)
(72) Inventor: Gorbunov, Boris Zachar, Canterbury, Kent CT1 3EY (GB); Priest, Nicholas Derham, Oxfordshire SN7 8QQ (GB)
(74) Representative: Hoarton, Lloyd Douglas Charles

(57) **Abstract**

A sampler for collecting aerosol particles from a flow of gas containing aerosol particles, which sampler has an inlet and an outlet and a collector having a plurality of collection regions onto which particles of predetermined sizes are collectable so that different sized particles are collected at different collection regions, each collection region comprising a porous medium.

A method of determining the size distribution of aerosol particles is also disclosed, utilising a sampler as above, wherein gas containing aerosol particles is retained in the sampler for a predetermined time period, and the sampler is subsequently analysed.

## Description

This invention relates to a particle sampler and method for obtaining size distributions of aerosol particles.

The distribution of sizes of aerosol particles in a gas can be of interest in many technical fields, including pollution monitoring. Any method of establishing the size distribution of aerosol particles has a lower limit on the size of particle which can be detected. It is advantageous for this lower limit to be as small as possible, so that an accurate distribution can be obtained.

A known method for establishing the size distribution of aerosol particles is based on the deposition of particles onto substrates in a cascade impactor, and analysis of the deposits. In a cascade impactor, particles of different sizes are collected onto different substrates due to the differences in their inertia. This is achieved by means of a number of air jets with specific characteristics, each stage of a cascade impactor having a different jet facing the substrate. Cascade impactors have good resolution, but the lower limit of the size of particle detectable is around 0.3µm.

Another known method for establishing the size distribution of aerosol particles is the deposition of particles onto a fibre or filter membrane. The fibre or membrane is then analysed. This is a simple method, but the information that can be derived about particle sizes is limited. Typically, various size selective inlets are used along with the fibre or membrane to obtain the mass fraction of a certain size of particle. This method allows a wide range of particle sizes to be detected, however the resolution is quite poor.

It is an object of the present invention to provide a cost-effective method of establishing the size distribution of aerosol particles which allows a wide range of particles to be detected, and has a high resolution.

Accordingly, the present invention provides a sampler for collecting aerosol particles from a flow of gas containing aerosol particles, which sampler has an inlet and an outlet and a collector having a plurality of collection regions onto which particles of predetermined sizes are collectable so that different sized particles are collected at different collection regions, each collection region comprising a porous medium.

Preferably, the sampler includes a size selective inlet.

Conveniently, the collector includes at least one net which is placed across the flow of gas.

Advantageously, the collector comprises a series of spaced apart nets.

Preferably, the gaps between the fibres of the net adjacent the inlet are larger than the gaps between the net adjacent the outlet.

Conveniently, at least one of the nets is a composite of two or more nets.

Advantageously, the nets are substantially orthogonal to the flow of gas.

Preferably, the collector includes at least one region of an internal surface of the sampler.

Conveniently, the internal surface is divisible into removable regions.

Advantageously, the collector includes at least one substantially planar surface which is not an internal surface of the sampler.

Preferably, the sampler includes a series of parallel and spaced apart planar surfaces.

Conveniently, the surfaces are arranged substantially parallel to the flow of gas.

Advantageously, the surfaces are elongate.

Preferably, the surfaces are divisible into removable regions.

Conveniently, at least a part of the sampler is inclined at an angle to the horizontal.

Advantageously, the collector includes at least one capillary.

Preferably, the inlet includes a variable diameter aperture through which the flow of gas is directed, to control the rate of the flow of gas.

Conveniently, the sampler includes a particle detector, through which the flow of gas is directed.

Advantageously, the particle detector is a cascade impactor.

Another aspect of the present invention provides a method of determining the size distribution of aerosol particles in a gas, comprising the step of: passing the gas through a sampler, which sampler has an inlet and an outlet and a collector having a plurality of collection regions onto which particles of predetermined sizes are collectable so that different sized particles are collected at different collection regions.

Advantageously, different collection regions of the collector are subsequently analysed individually.

Preferably, the gas leaving the sampler through the outlet is analysed.

Conveniently, deconvolution is employed to determine the size distribution of particles in the gas.

A further aspect of the present invention provides a method of determining the size distribution of aerosol particles, utilising any sampler described above, wherein gas containing aerosol particles is retained in the sampler for a predetermined time period, and the sampler is subsequently analysed.

In order that the invention may be better understood, specific embodiments of the invention will now be described, by way of example, with reference to the accompanying drawings, in which;
Figure 1 is a schematic cross-section through a known filter sampler;
Figure 2 is a schematic cross-section through a sampler embodying the present invention.
Figure 3 is a schematic cross-section through another sampler embodying the present invention.
Figure 4 is a schematic cross-section through a further sampler embodying the present invention.
Figure 5 is a schematic cross-section through another sampler embodying the present invention.
Figure 6 is a schematic cross-section through a further sampler embodying the present invention.
Figure 7 is a schematic cross-section through another sampler embodying the present invention.

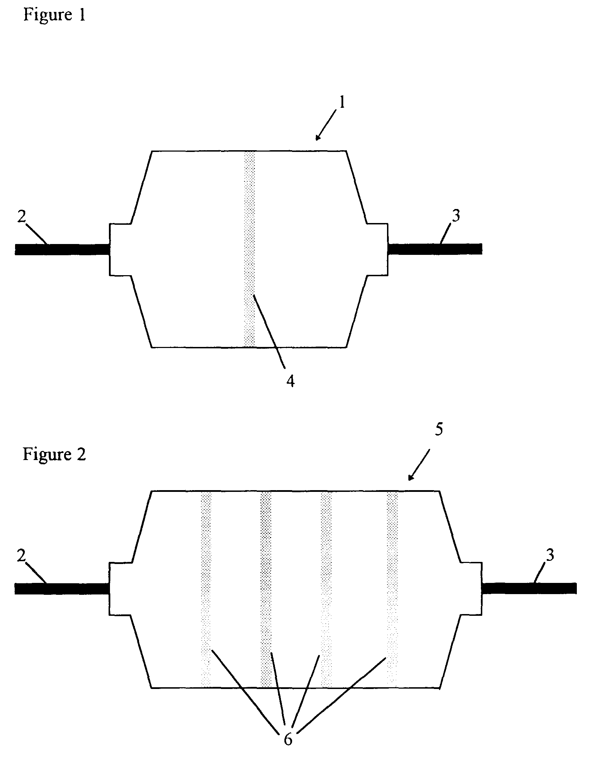

With reference to Figure 1, a known filter sampler 1 consists of an enclosed volume, which has an inlet 2 and an outlet 3, and a single filter 4 positioned between these. In operation, gas containing aerosol particles flows in through the inlet 2 and out through the outlet 3, passing through the filter 4. Particles are retained by the filter 4, and this filter 4 can be removed after operation of the sampler 1 and analysed. This type of sampler 1 does not provide information about the size distribution of the aerosol particles, as all particles are retained at the same location.

Figure 2 shows a sampler 5 embodying the present invention. The sampler 5 consists of an elongate enclosed volume which has an inlet 2 at one end, an outlet 3 at the opposite end and a series of nets 6 which are spaced apart from one another at regular intervals along the length of the sampler volume. The nets 6 are arranged vertically and substantially orthogonal to the direction of gas flow through the sampler. Each net 6 is designed to retain a different size of aerosol particle. The flow of gas through the sampler 5 (and through all of the embodiments in the Figures) is established by means of a pump (not shown), which may be positioned before or after the sampler 5.

Aerosol particles of different sizes have different collision efficiencies, the smallest particles having the highest collision efficiencies. This means that smaller particles are more likely to be moved towards fibres of a net 6 and be captured by the net. The first net 6, therefore, has the lowest density of fibres and therefore the largest gaps between fibres, and is designed to retain the smallest particles. Subsequent nets 6 have progressively higher densities of fibres, and are designed to retain progressively larger particles. Below is a table, showing the sizes of particles that are typically retained by nylon nets in a four-stage sampler such as the one shown in Figure 2.

| | Mesh opening of screen (µm) | Sizes of particles collected (nm) |
|---|---|---|
| First net | 180 | 1 - 15 |
| Second net | 41 | 15 - 40 |
| Third net | 41 (3 net composite) | 40 - 150 |
| Fourth net | 20 | 150 - 300 |

The nets in the above table are Nylon Net Filters (Nylon PA 6,6; polyamide 6,6), supplied by Millipore UK. As is the case with the third net, any of the nets may be a composite of one or more other nets. In this example, the rate of flow through the sampler is constant at 20 litres per minute or less, and the humidity of the sampler is around 80%.

In operation a flow of gas containing particles is established through the sampler 5 for a predetermined time period at a predetermined flow rate.

After the gas has been passed through the sampler 5, the nets 6 can be individually removed and analysed. The size distribution of aerosol particles in the gas which flowed through the sampler 5 is obtained by conventional deconvolution methods. Using such methods, a lower limit of 1 nm of the size of particle that is detected can be achieved.

Methods of analysing the deposits on the nets 6 include atomic absorption spectroscopy, gas chromatography, gas chromatography with a mass spectrometer sensor, high performance liquid chromatography, gravimetrical analysis, and any chemical analysis.

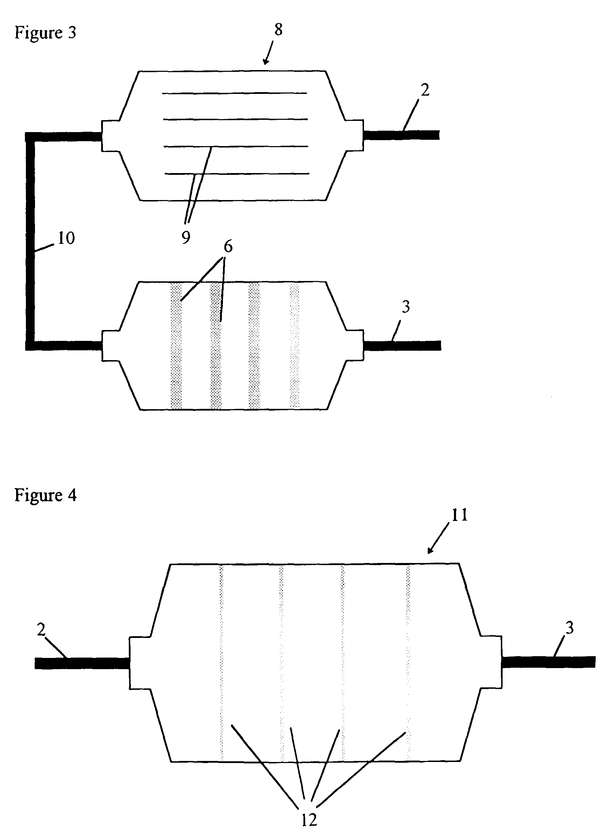

Figure 3 shows another sampler 7 embodying the present invention, the sampler 7 includes two enclosed volumes, one of which is an elongate sedimentation cell 8 having an inlet 2 and the other of which comprises the sampler 5 of Figure 2 having an outlet 3, the two volumes being connected together by a tube 10. The sedimentation cell 8 encloses a number of parallel spaced apart and substantially horizontal planar surfaces 9 arranged to lie substantially parallel to the gas flow in the sedimentation cell 8. The planar surfaces are porous. The outlet from the sedimentation cell 8 leads through the tube 10 to the inlet of the second enclosed volume, the sampler 5 of Figure 2.

In operation, a flow of gas containing particles is established through the sampler 5 for a predetermined time period at a predetermined flow rate. The horizontal surfaces 9 will collect different sized particles at different locations along their lengths, as larger particles will tend to settle more easily on these surfaces and so will settle nearer the inlet 2 than lighter particles. Particles which are too light to settle on the surfaces 9 at all will be carried through the tube 10 into the second volume and will be retained by the nets 6. After gas has been passed through the sampler 5, the surfaces 9 and the nets 6 can be removed and analysed. Any of the analysis methods mentioned above in relation to the sampler 5 of Figure 2 may also be used to analyse the deposits on the surfaces 9. Any of the surfaces 9 may be splittable along its length into shorter sections, to facilitate individual analysis of each divided section.

Figure 4 shows another sampler 11 embodying the present invention. This sampler 11 includes an enclosed volume which has a series of capillaries 12. The capillaries 12 comprise a porous medium into which particles can enter and be retained. In a similar fashion to that in which particles are retained by the nets 6 in Figures 2 and 3, there is increasing density of capillaries 12 in the series towards the outlet 3, such that progressively larger particles are retained by successive capillaries in the series. Again, deconvolution methods need to be used to calculate the size distribution of the aerosol particles.

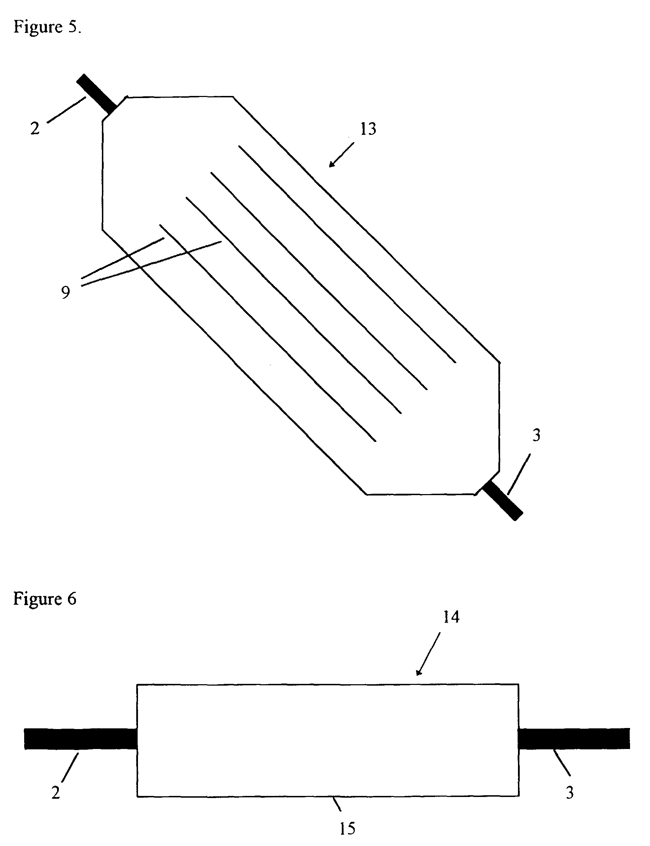

Figure 5 shows a further sampler 13 embodying the present invention. The sampler 13 is similar to the previously described sampler 8 containing parallel porous surfaces 9, although in this embodiment the entire sampler 13 is inclined at an angle of approximately 45°, so that the inlet 2 is higher than the outlet 3. This means that the deposition of particles will occur in a different pattern along the parallel surfaces, with the size of particles deposited varying more gradually along the length of the surfaces 9. Thus, the concentration of particle sizes will vary along the length of the parallel surfaces 9 such that different regions of the same parallel surface 9 will have different concentrations of respective particle sizes

Figure 6 shows a further sampler 14 embodying the present invention, which consists of a cylinder 15 having an inlet 2 and an outlet 3. Gas containing aerosol particles passes through the cylinder, and particles will settle on an internal lining or surface of the cylinder 15. The internal lining or surface is porous. In a similar way to the deposition of particles on the surfaces 9 of previously described samplers 8, 13, heavier particles will tend to settle nearer the inlet 2 than lighter ones. After gas has flowed through the sampler 14 for a predetermined time period, the internal surface of the cylinder 15 can be analysed. In the present example, the lining or internal surface is nominally divided into discrete regions along its length such that each region will provide an indication of the concentrations of particle sizes. Alternatively, the internal surface may be physically divided along its length so that individual regions can be analysed separately.

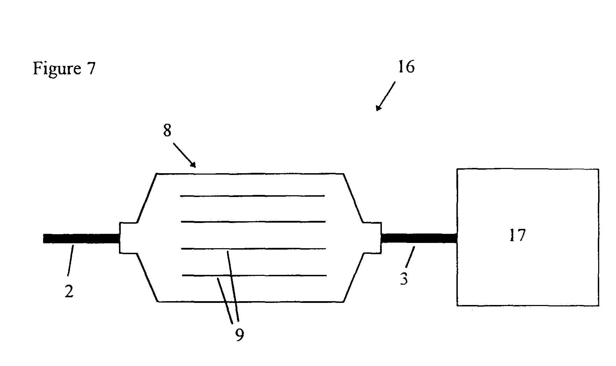

Figure 7 shows another sampler 16 embodying the present invention, which can be used to determine the size distribution of aerosol particles. The apparatus comprises a sedimentation cell 8 defining an enclosed volume with an inlet 2 and an outlet 3, and horizontal porous surfaces 9 as described above in relation to Figure 3, with the difference that the conditions in the volume (e.g. flow rate, humidity, configuration of surfaces 9) are such that not all aerosol particles will be retained by the surfaces 9. There will be a critical size of aerosol particle above which a particle will be retained by the surfaces 9 and below which the particle will escape retention by the surfaces 9 and pass out of the volume through the outlet 3. The apparatus also includes an optical sensor 17 (e.g. an AMS9501S, manufactured by Casella) which is connected to the outlet, and which counts the particles passing through it. This apparatus can be used repeatedly, with different operating conditions in the volume (e.g. a different rate of flow, or surfaces with different lengths). For each set of conditions, the number of particles passing out of the volume without being retained by the surfaces 9 can be measured, and after repeated readings with appropriate different conditions, deconvolution methods can be used to determine the size distribution of the aerosol particles.

The sampler of Figure 7 can also be used in conjunction with a 'stop-flow' technique, wherein gas flows through the volume and then the flow of gas through the volume is stopped for a "no-flow" period. During this period, particles above a certain collision efficiency will be retained on the porous surfaces 9 and particles below the certain collision efficiency will not be retained. This critical collision efficiency will depend on the conditions in the volume, as well as the length of the no-flow period. After the no-flow period, the flow of gas can be restored, and the gas leaving the volume can be analysed, or the porous surfaces 9 can be removed and analysed. Several such cycles can be carried out, with different conditions inside the volume and/or a different no-flow period each time, and conventional deconvolution methods can be used to establish the size distribution of the aerosol particles, as above. Any of the sampler designs described above could be used to implement this 'stop-flow' technique.

It is envisaged that the various porous collection surfaces described above, the nets, the horizontal parallel surfaces, the capillaries and the internal surface of the sampler can be used together in various combinations.

## Claims

1. A sampler for collecting aerosol particles from a flow of gas containing aerosol particles, which sampler has an inlet and an outlet and a collector having a plurality of collection regions onto which particles of predetermined sizes are collectable so that different sized particles are collected at different collection regions, each collection region comprising a porous medium.

2. A sampler according to Claim 1, wherein at least one of the porous media is a net.

3. A sampler according to any preceding claim, wherein the collector comprises a series of spaced apart nets.

4. A sampler according to Claim 3, wherein the gaps between the fibres of the net adjacent the inlet are larger than the gaps between the fibres of the net adjacent the outlet.

5. A sampler according to Claim 3 or 4, wherein at least one of the nets is a composite of two or more nets.

6. A sampler according to any preceding claim, wherein at least one collection region comprises at least one capillary.

7. A sampler according to any preceding claim, wherein the porous media are positioned substantially perpendicular to the flow of gas.

8. A sampler according to Claim 1, wherein the porous media are positioned substantially parallel to the flow of gas.

9. A sampler according to Claim 8, wherein at least one of the substrates comprises a region of an internal surface of the sampler.

10. A sampler according to Claim 8 or 9, wherein at least one of the substrates comprises a substantially planar surface which is not an internal surface of the sampler.

11. A sampler according to Claim 10, wherein the substrates comprise a series of parallel and spaced apart planar surfaces.

12. A sampler according to any one of Claims 8 to 11, wherein at least one of the substrates is elongate.

13. A sampler according to any one of Claims 8 to 12, wherein at least one of the substrates is divisible into removable regions.

14. A sampler according to any preceding claim, wherein the inlet is size selective.

15. A sampler according to Claim 14, wherein the inlet includes a variable diameter aperture through which the flow of gas is directed, to control the rate of the flow of gas.

16. A sampler according to any preceding claim, wherein the sampler includes a particle detector, through which the flow of gas is directed.

17. A sampler according to Claim 16, wherein the particle detector is a cascade impactor.

18. A method of determining the size distribution of aerosol particles in a gas, comprising the step of: passing the gas through a sampler, which sampler has an inlet and an outlet and a collector having a plurality of collection regions onto which particles of predetermined sizes are collectable so that different sized particles are collected at different collection regions, each of the collection regions comprising a porous medium.

19. A method according to Claim 18, wherein the porous media are positioned substantially parallel to the flow of gas.

20. A method according to Claim 18 or 19, wherein different collection regions of the collector are subsequently analysed individually.

21. A method according to any one of Claims 18 to 20, wherein the gas leaving the sampler through the outlet is analysed.

22. A method according to any of Claims 18 to 21, wherein deconvolution is employed to determine the size distribution of particles in the gas.

23. A method of determining the size distribution of aerosol particles, utilising a sampler according to any preceding claim, wherein gas containing aerosol particles is retained in the sampler for a predetermined time period, and the sampler is subsequently analysed.
